# EUROPEAN PATENT SPECIFICATION

(11) **EP 4 413 227 B1**
(45) Date of publication and mention of the grant of the patent: **29.04.2026**
(21) Application number: 22790386.1
(22) Date of filing: 05.10.2022
(51) Int. Cl.: E21B 7/02, B60L 50/50, E21F 17/06, B60L 50/60

(54) **ROCK DRILLING RIG, SYSTEM OF MINING EQUIPMENT AND METHOD THEREFOR**
GESTEINSBOHRANLAGE, SYSTEM EINER BERGBAUAUSRÜSTUNG UND VERFAHREN DAFÜR
APPAREIL DE FORAGE DE ROCHE, SYSTÈME D'ÉQUIPEMENT D'EXPLOITATION MINIÈRE ET PROCÉDÉ ASSOCIÉ

(30) Priority: 08.10.2021 SE 2151242
(43) Date of publication of application: 14.08.2024
(73) Proprietor: Epiroc Rock Drills Aktiebolag, 701 91 Örebro (SE)
(72) Inventor: PERSSON, Anders, 663 91 Hammarö (SE); MALM, Patrik, 719 94 Vintrosa (SE); ROOS, Per, 703 63 Örebro (SE)
(74) Representative: Epiroc Rock Drills AB
(86) International application number: PCT/SE2022/050893
(87) International publication number: WO 2023/059252

(56) References cited:
- EP-A1- 2 955 316
- WO-A1-2010/061058
- WO-A1-2019/088899
- WO-A1-2019/088900

## Description

### TECHNICAL FIELD

The present disclosure relates to mining equipment devices and especially to an electrically powered rock drilling rig. The present disclosure further relates to a system of mining equipment, comprising at least one rock drilling rig. The present disclosure further relates to a method for controlling a rock drilling rig.

### BACKGROUND

Rock drilling rigs are used for several purposes, exploration drilling which aims to identify the location and quality of a mineral, and production drilling, used in the production-cycle in a mining or construction are.

Traditionally, mining equipment such as rock drilling rigs have been driven by combustion engines. However, in recent years growing environmental concerns has driven the mining industry to reduce or phasing out the traditional combustion engine to reduce and eventually stop the emission of greenhouse gases from fossil fuels.

In the mining industry the solution is focused on electrification of the machine park. Electrification has some challenges, mainly in the capacity of today's electric batteries, especially in a rock drill rig, where high power outputs are needed during rock drilling. This is solved in that the rock drill rig can be connected to an external electrical network, when performing its rock drilling work cycle. A proposed solution to such problems is the substitution of the combustion engine with an electrical motor, driven partly by an electric battery and a connection to an external electrical network. When the rock drilling rig performs its work cycle with the rock drilling machine, the rock drilling rig must be connected to an external electrical network for powering the rock drilling rig. This solution does eliminate direct emissions of CO₂ and usage of fossil fuels but does however also provide several drawbacks. Such a rock drill rig may be found in the patent applications WO 2019088899 A1, WO 2019088900 A1, WO 2010061058 A1 and EP 2955316 A1.

One exemplary drawback is the availability of an external electrical network with sufficient power capacity at the work site. Another drawback is that the connection to an external electrical network by a power cable, limit the movability of the machine, and could form an obstacle for other mining equipment devices in the same working area.

### SUMMARY

An object of the present invention is to provide a rock drilling rig as defined in the independent claim 1.

Another object of the present invention is to provide a method for controlling a rock drilling rig, as defined in independent claims 10 or 11.

One object is solved by a rock drilling rig, comprising a carriage, a rock drilling machine, a control unit and an interface for receiving at least one electrical battery, wherein
the control unit is configured to control the rock drilling rig to perform work tasks according to a work cycle, to control operating power from any electric battery pack provided in the interface to the rock drilling rig, wherein
the interface is configured to receive a plurality of independent battery packs and the control unit (CU) is configured to selectively control operating power from any electrical battery provided in the interface
wherein the rock drilling rig further comprises an electrical connection for connecting the rock drilling rig to an external electrical source at a work area, and wherein
the control unit is configured to selectively charge any electrical battery pack, from the external electrical source, simultaneously as powering the rock drilling rig or another electrical battery pack is powering the rock drilling rig, the control unit is configured to continuously monitor and process a plurality of battery parameters indicating any one of: state of charge, state of health, input current and output current and dependent thereon configured to indicate an electric battery pack, having a battery parameter value below a corresponding threshold value for that parameter, for being ready for exchange.

An exemplary effect of the suggested rock drilling rig is that it allows full flexibility and independence of the presence of an external electrical network, simultaneously as it can continuously be provided with power, because electric battery packs can be exchanged during powering of the rock drilling rig. Another exemplary effect of having a rock drilling rig with an interface configured to receive a plurality of electric batteries is that the rock drilling rig can be powered from any one of the separate electrical battery packs provided in the interface, allowing a large working area of the rock drilling rig. Additionally, electric battery packs provided in the interface, not being used for powering the rock drilling rig, can be charged and/or exchange simultaneously as the rock drilling rig performs its work cycle at the work site and is powered from another battery provided in the interface. Furthermore, the use of the electric battery packs can be optimised dependent on the planned work tasks ahead, e.g., an electric battery pack with high state of health can be reserved for heavy drilling and/or a more degraded electric battery pack can be used for powering the rock drilling rig between two worksites.

The external electrical source can be an external electrical grid or an external charging vehicle.

One exemplary effect of providing an electrical connection, e.g., an electrical cord to an external electrical source, is that the batteries not providing power to the rock drilling rig can be charged simultaneously as the rock drilling rig is performing its work tasks according to the work cycle.

In the context of this disclosure an electric battery pack is defined as an individual electric battery, normally build up of individual battery cells arranged in battery modules. Wherein a plurality of battery modules forms the electrical battery pack. The electric battery pack is an independent electric battery, e.g., with its own battery management system. In a mining application the battery is today probably a lithium-ion battery, but the disclosure is not limited thereto. Other types of electric batteries, such as solid-state batteries, lithiumsulphur and/or other alternative batterie types and/or super capacitators can also be used in any suitable combination.

A plurality of sensors can be arranged upon the rock drilling rig. The sensors are configured to monitor and produce data from individual devices of the rock drilling rig. None limiting examples are the energy storage level of any of the electrical battery packs arranged in the interface and/or the current input/output from the electrical battery packs, spatial localisation of rock drilling rig and/or individual devices, spatial localisation of individual entities of the rig in relation to each other, temperature, pressure and/or current to and from electrical devices. The control unit is configured to receive, and process data from the plurality of sensors and control the rock drilling rig, it's individual parts and the interaction therebetween, dependent thereon. None limiting examples are the use of individual electrical battery packs dependent on at least the received and monitored data.

The control unit can be a central control unit, or a distributed control unit, using the computing power of a plurality of control units in a network and/or cloud network. The work cycle can be a predefined work cycle or a dynamically updated work cycle, dependent on work area specific parameters. For a rock drilling rig exemplary work tasks are drilling and transportation between drill sites.

The interface provides an electrical connection between any electrical battery provided therein and the electrical power system of the rock drilling rig. The electrical power system of the rock drilling rig comprises of two main parts, a first part for propelling a carriage of the rock drilling rig and a second part for powering a rock drilling machine provided at the carriage.

A rock drilling rig comprises a carriage and rock drilling machine. The rock drilling machine is arranged on and connected to the carriage by means of a boom, so that the rock drilling unit can be arranged in different positions in relation to the carriage and to the rock to be drilled. Together, the carriage, rock drilling machine and the boom form the rock drilling rig. The rock drilling rig disclosed herein is configured to selectively be provided with operating power from any electric battery pack arranged in the interface of the rock drilling rig. Operating power is the power for operating the rock drilling rig, such as propulsion of carriage and/or powering of rock drilling machine and/or any of the subsystems of the rock drilling machine.

In one exemplary rock drilling rig, the rock drilling rig comprises a plurality of electrical battery packs arranged in the interface.

In one exemplary rock drilling rig, the control unit is configured to selectively control which, or which combination of electrical battery pack are powering the rock drilling rig.

One exemplary effect thereof is that the control unit can determine the most suitable electrical battery pack in terms of state of health, state of charge and/or work plan for the rock drilling rig.

In one exemplary rock drilling rig, the electric battery pack and a battery management system is configured to divide the electric battery pack into partitions. In the context of this disclosure, the battery management system can be a part of a distributed control unit. The partitions can be in the size of an individual battery cell and/or a plurality of battery cells and/or a battery module and/or a plurality of battery modules. The control unit is configured to selectively control which, or which combination of partitions that should be used for powering the rock drilling rig and/or which combination of partitions that should be charged by an external and/or onboard source.

One exemplary effect of providing the rock drilling rig with an electric battery pack divided into partitions, is that power take out and charging of the individual battery partitions can be made dependent on the individual battery partitions state of health, state of charge and/or any other battery specific parameter.

The control unit is configured to continuously monitor and process a plurality of battery pack parameters indicating any one of: state of charge, state of health, input current and output current and dependent thereon configured to indicate an electric battery pack having a battery parameter value below its corresponding threshold value, for being ready for exchange, charge and/or powering of the rock drilling rig.

One exemplary effect thereof, is that the control unit becomes full control of the individual electrical battery packs and thereby enables fast exchange and/or charge of individual electrical battery packs when needed.

In one exemplary rock drilling rig, the rock drilling rig further comprises a fuel cell, which is configured to
- power the rock drilling rig alone or in combination with any battery pack arranged thereon,
- charge any electrical battery pack arranged thereon.

One exemplary effect thereof is that the rock drilling rig becomes a high redundancy in its powering system and becomes fully independent of any external electrical connections, due to the possibility to continuously charging of the electrical battery packs with the fuel cell.

One object of this disclosure is solved by a system of mining equipment of any combination defined above, comprising at least a rock drilling rig, a plurality of battery packs and a control unit, and
- the rock drilling rig comprises a carriage, a rock drilling machine, and an interface for receiving at least one electrical battery,
- the electrical battery packs are physical separate entities and are configured to be controlled independent of each other, and
- the control unit is configured to
   - control the rock drilling rig to perform work tasks according to a work cycle,
   - operating power from any electric battery pack provided in the interface of the at least one rock drilling rig.

An exemplary effect of the suggested system of mining equipment is that the rock drilling rig can be powered from any one of the separate electrical battery packs provided in the interface, allowing a large working area of the system of mining equipment. Furthermore, the use of the electric battery packs can be optimised dependent on the planned work tasks ahead, e.g., an electric battery pack with high state of health can be reserved for heavy drilling and/or a more degraded electric battery pack can be used for powering the rock drilling rig between two worksites.

In one exemplary system the rock drilling rig further comprises an electrical connection for connecting the rock drilling rig to an external electrical source at a work area, and wherein the control unit is configured to selectively charge any electrical battery pack, from the external electrical source, simultaneously as powering the rock drilling rig or another electrical battery pack is powering the rock drilling rig.

The external electrical source can be an external electrical grid or an external charging vehicle.

One exemplary effect of providing an electrical connection, e.g., an electrical cord to an external electrical source, is that the batteries not providing power to the rock drilling rig can be charged simultaneously as the rock drilling rig is performing its work tasks according to the work cycle.

In one exemplary system the control unit is further configured to
- continuously monitor and process a plurality of battery pack parameters of the electrical battery packs, and
- dependent thereon configured to indicate an electric battery pack, having a battery parameter value below a corresponding threshold value for that parameter, for being ready for exchange, charge and/or powering of the at least one rock drilling rig.

One exemplary effect thereof is that the rock drilling rig can continuously be provided with battery packs with sufficient state of health and state of charge for performing its work cycle, and this without interruption, due to the possibility to exchange batteries when powering the rock drilling rig.

In one exemplary system of mining equipment the system additionally comprises a plurality of sensors, and
the plurality of sensors is configured to monitor and produce data of at least one of
- a capacity of the battery packs in the fleet of battery packs,
- a position of the mining equipment devices,
- a position of the electrical battery packs, and/or
- any connection between battery packs and a specific mining equipment device.

The capacity of the battery packs can e.g., be state of health, state of charge, maximum charge capacity.

The position can for example be received through spatial localisation system, e.g., a satellite positioning system such as GPS, Glonass or a local spatial localisation system.

The combination of sensors can be selected dependent on the preference system control and optimisation.

One exemplary effect thereof is that the control unit can monitor and process all relevant data of the system in order to optimise the charge and exchange of the battery packs in time and position in relation to the excavation plan.

One exemplary system comprises at least one additional mining equipment device and that mining equipment device is provided with a corresponding interface, wherein the electrical battery packs are interchangeable in between all interfaces of the at least one mining equipment device and the rock drilling rig.

One exemplary effect including additional mining equipment devices into the system is a higher flexibility and possibility to prolong the battery life cycle, by providing mining equipment devices with a lower power need with the electrical battery packs with lower state of health and maximum charge capacity. Fresh batteries in the beginning of their life cycle can be arranged in devices in need of high-power output and degraded batteries at the end of their life cycle can be provided in devices with need of only low power outputs, e.g. in loaders, or service and/or maintenance vehicles.

None limiting exemplary mining equipment devices are rock drilling rigs, excavators, shovels, draglines, bulldozers, loaders, scrapers, skid steers, motor graders, off-highway dumpers, haul trucks, tank vehicles, water vehicles, forklifts, transport vehicles, cranes, conveyor systems, classifiers, crushers and/or multipurpose vehicles.

In one exemplary system, the electric battery packs comprise electrical battery packs of different maximum charge capacity.

One exemplary effect of having a system with electrical battery packs with different maximum charge capacity, is that it increases the optimisation possibilities.

One object is solved through a method for controlling a rock drilling rig of any combination defined above, wherein the control unit performs the method of:
controlling the rock drilling rig to perform work tasks according to a work cycle,
selectively control operating power from any electrical battery provided in the interface to the rock drilling rig dependent on battery specific parameters of the individual electrical battery packs and the work cycle,
and wherein the rock drilling rig comprises an electrical connection for connecting the rock drilling rig to an external electrical source at a work area, and the control unit additionally:
   - selectively charging any electrical battery pack in the interface, with electrical power from the external electrical source, simultaneously as powering the rock drilling rig or another electrical battery pack is powering the rock drilling rig.

One exemplary effect is that the electrical battery pack not used for powering the rock drilling rig can be charged simultaneously as the rock drilling rig is powered.

One exemplary effect of the method is that the rock drilling rig can be powered from the battery most suitable for the work task and an overall optimisation of the battery capacity is achieved. E.g., if the carriage should be powered for transportation between two work positions, a battery with lesser state of charge and/or state of health can be used and if a work cycle with the drilling machine should be performed a fully charge battery with high state of health can be selected for powering the rock drilling rig. The battery specific parameters

One object is solved through a method for controlling a system of mining equipment of any combination defined above, wherein the system comprises at least a rock drilling rig, a plurality of electrical battery packs and a control unit, and
- the rock drilling rig comprises a carriage, a rock drilling machine, and an interface for receiving at least one electrical battery pack,
- the electrical battery packs are physical separate entities and configured to be controlled independent of each other, and
the control unit performs the method:
- controlling the rock drilling rig to perform work tasks according to a work cycle, and
- controlling operating power to the rock drilling rig from any electric battery pack provided in the interface of the at least one rock drilling rig
- continuously monitoring and processing a plurality of battery pack parameters of the electrical battery packs, and
- indicating an electric battery pack, having a battery parameter value below a corresponding threshold value for that parameter, for being ready for exchange, charge and/or powering of the at least one rock drilling rig.

One exemplary effect thereof is that the rock drilling rig can continuously be powered by battery packs, with sufficient state of health and state of charge for performing its work cycle, without interruption. This is due to the possibility to exchange faulty or low performing electric battery packs arranged in the interface, when they are not powering the rock drilling rig.

The indication can be an optical signal, a sound signal or preferably an electrical signal communicating the status of the indicated electrical battery pack. The control unit can thereby control the machine with the indicated battery to a charging and/or exchange station or alternatively control another mining machine within the system to charge the indicated electric battery pack or for exchange of the indicated electrical battery pack.

In one exemplary method for controlling the system of mining equipment, in which the system comprises at least one additional mining equipment device and that mining equipment device is provided with a corresponding interface, wherein the electrical battery packs are interchangeable in between all battery interfaces between different types of mining equipment devices and the rock drilling rig and the control unit:
- continuously monitor and processing input data from all the rock drilling rig and the at least one additional mining equipment device,
- assigning electrical battery packs to the mining equipment devices dependent on the specific mining equipment devices working plan and/or maximum power output.

One exemplary effect of this method is that the control unit can dynamically set a hierarchy among the electric battery packs, depending on their state of health or any other battery indicator which is used for determining the individual battery packs suitability for different mining equipment devices.

### BRIEF DESCRIPTION OF THE DRAWINGS

The invention is now described, by way of example, with reference to the accompanying drawings, in which the same reference notations denote similar items in the various figures, and in which:
Fig. 1 illustrates a schematic representation of a rock drilling rig in accordance with an exemplary embodiment.
Fig. 2 illustrated a schematic representation of a system of mining equipment in accordance with an exemplary embodiment.
Fig. 3 shows a flowchart of a method according to an example.
Fig. 4 shows a flowchart of a method according to an example.

### DETAILED DESCRIPTION

The detailed description with reference to the disclosed embodiments are to be viewed as examples that combining specific features described above. It is to be understood that additional examples may be achieved by combining other and/or fewer/more features than in the disclosed embodiments. Hence, the figures disclose exemplary embodiments and not as exclusive combinations. In this context is should also be noted that, for the sake of simplicity, all figures are schematically disclosed, as long as nothing else is said.

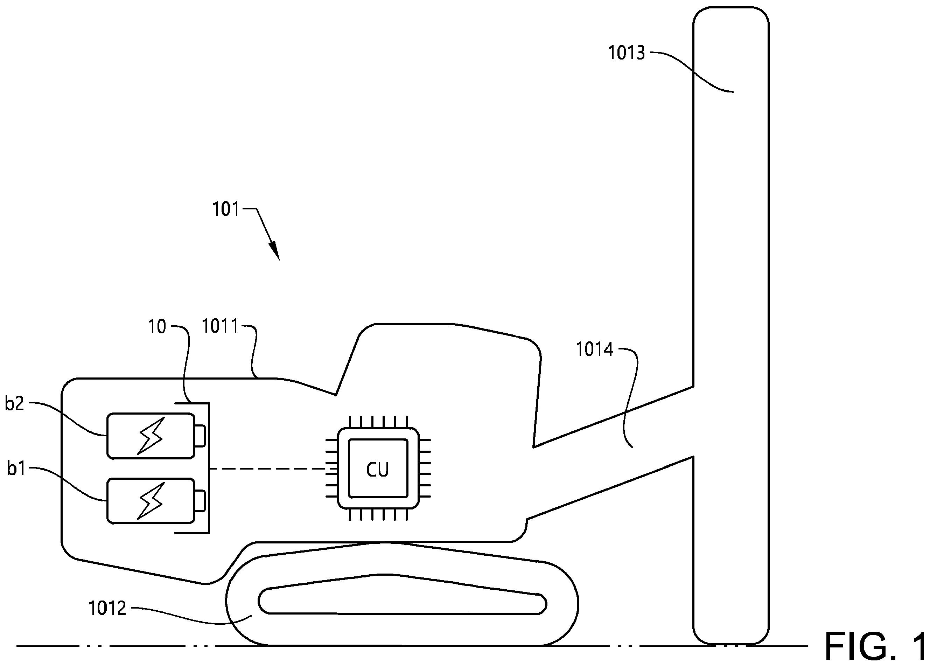

Figure 1 shows a schematic representation of a rock drilling rig 101 as disclosed herein. The rock drilling rig 101 of figure 1 comprises a carriage 1011 and a rock drill machine 1013 attached to the front of the carriage 1011. The rock drilling machine 1013 is arranged on and connected to the carriage 1011 by means of a boom 1014, so that the rock drilling machine 1013 can be arranged in different positions in relation to the carriage 1011 and to the rock to be drilled. Together, the carriage 1011, rock drilling machine 1013 and the boom 1014 form the main part of the rock drilling rig 101. The carriage 1011 is further provided with moving means 1012 such as wheels or continuous track and propulsion equipment. The rock drilling rig 101 further comprises an interface 10, in which a plurality of electrical battery packs b1, b2 can be arranged for electrical connection to the rock drilling rig 101.

The rock drilling rig 101 further comprises a control unit CU. The rock drilling rig 101 is provided with operative power from any of the electric battery packs b1, b2 arranged in the interface 10. Operative power is power that either powering the propulsion equipment and/or the rock drilling machine 1013. When the rock drilling rig 101 is operated, the control unit CU is configured to selectively control operating power from any electrical battery pack b1, b2 provided in the interface 10 of the rock drilling rig 101, dependent on battery specific parameters of the individual electrical battery packs X and the work cycle. A work cycle normally comprises a plurality of work tasks. The control unit CU is further configured to selectively charge any electrical battery pack b1, b2 , with energy from an external electrical source (not shown in figure 1), simultaneously as powering the rock drilling rig 101 or another electrical battery pack b1, b2 is powering the rock drilling rig 101.

The operating power can be delivered from one or a plurality of electric battery packs b1, b2 arranged in the interface 10.

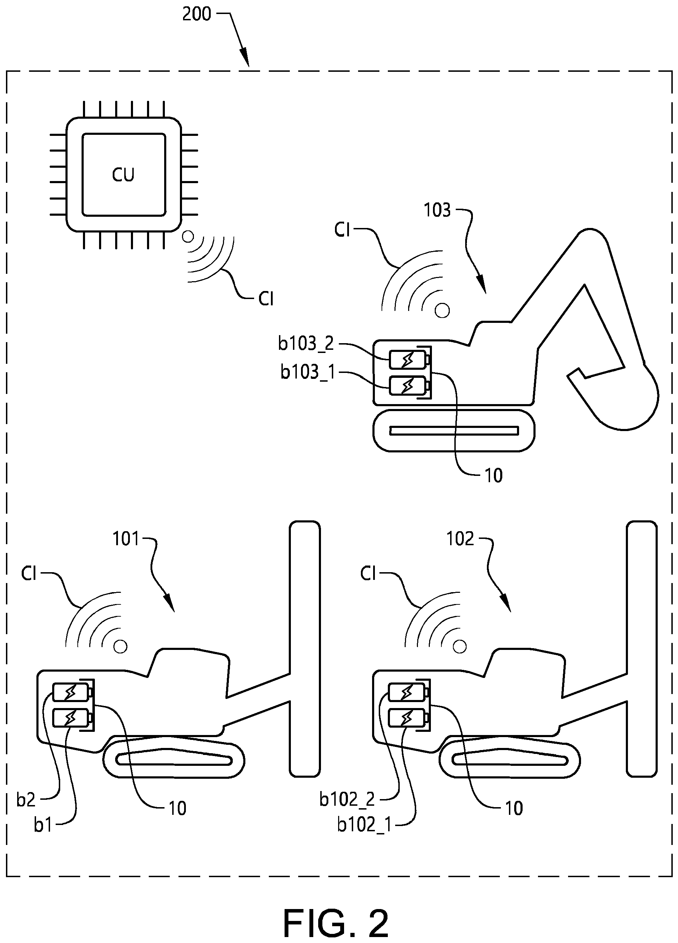

Figure 2 shows a schematic representation of a system of mining equipment according to one possible embodiment of the present invention. The system 200 comprises at least one rock drilling rig 101 and a control unit CU and two additional mining equipment devices, i.e., another rock drilling rig 102 and, an excavator 103. All the mining equipment devices 101, 102, 103 are provided with an interface 10, for receiving at least one electrical battery pack. The system could comprise other mining equipment devices, e.g., shovels, draglines, bulldozers, loaders, scrapers, skid steers, motor graders, off-highway dumpers, haul trucks, tank vehicles, water vehicles, forklifts, transport vehicles, cranes, conveyor systems, classifiers, crushers and/or multipurpose vehicles. In the schematic representation illustrated in figure 2, the rock drilling rig 101, the rock drilling rig 102 and the excavator 103 are the mining equipment devices present in the system 200.

Fig. 2 additionally schematically discloses a communication interface Cl providing a data link between each mining equipment device 101, 102, 103 of system 200. The control unit CU can as before be part of a distributed network of control units, i.e., a fog- and/or cloudcomputation system.

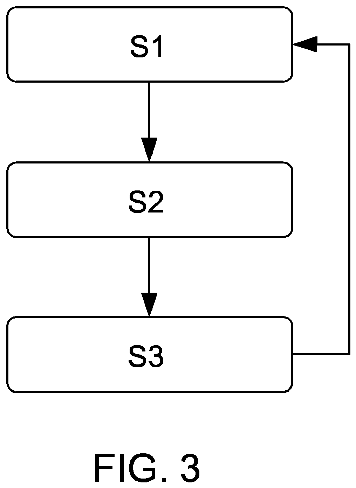

Figure 3 shows a flowchart of an exemplary method as disclosed herein. The method is performed by a control unit CU, for controlling a rock drilling rig 101, as previously defined.

The method comprising controlling S1 that the rock drill rig 101 performs a work task according to a work cycle, and selectively control S2 operating power from any electrical battery pack b1, b2 provided in the interface 10 of the rock drilling rig 101, dependent on battery specific parameters of the individual electrical battery packs b1, b2 and the work cycle. As previously described, the rock drilling rig 101 further comprises an electrical connection for connecting the rock drilling rig 101 to an external electrical source at a work area. The method illustrated in figure 3 further comprises selectively charging S3 any battery packs b1, b2 in the interface 10 with electrical power from the external electrical source, simultaneously as powering the rock drilling rig or another battery pack b1, b2 is powering the rock drilling rig 101.

By controlling the rock drilling rig 101 according to the herein defined method the power resources of the individual electrical battery packs b1, b2 can be allocated to the work tasks most suitable with regard to the individual electric battery packs specific parameters.

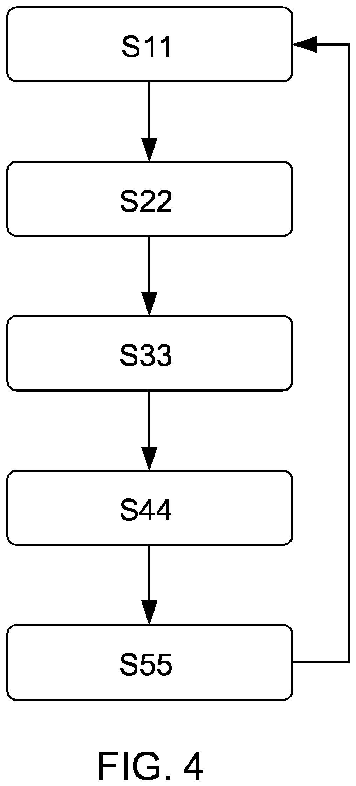

Figure 4 shows a flowchart of an exemplary implementation of the method for controlling a system 200 as disclosed herein, wherein the system comprise at least
a first rock drilling rig 101, a plurality of battery packs b1, b2 and a control unit CU, and
- the rock drilling rig 101 comprises a carriage 1011, a rock drilling machine 1013, and an interface 10 for receiving at least one electrical battery pack b1, b2,
- the electrical battery packs b1, b2 are physical separate entities and independent of each other, and
- at least one additional mining equipment device 102, 103 and that mining equipment device 102, 103 is provided with a corresponding interface 10 as the rock drilling rig 101, wherein the electrical battery packs b1, b2 are interchangeable in between all battery interfaces 10 between different types of mining equipment devices 102, 103 and the first rock drilling rig 101.

The method is performed by a control unit CU, wherein:
controlling S11 the rock drilling rig 101 to perform work tasks according to a work cycle,
controlling S22 operating power to the rock drilling rig 101 from any electric battery pack b1, b2 provided in the interface 10 of the at least one rock drilling rig 101, dependent on battery specific parameters of the individual electrical battery packs b1, b2 and the work cycle, and
continuously monitor and processing S33 input data from the rock drilling rig 101 and the at least one additional mining equipment device 102, 103,
indicating S44 an electric battery pack b1, b2, having a battery parameter value below a corresponding threshold value for that parameter, for being ready for exchange and/or charge, and
assigning S55 an electrical battery pack b1, b2, to the mining equipment devices dependent on the specific mining equipment devices 101, 102, 103 working plan and/or maximum power output.

When indicating S44, the indication can be an optical signal, a sound signal or preferably an electrical signal communicating the status of the indicated electrical battery pack. The control unit CU can thereby control the mining equipment device 101, 102, 103 with the indicated battery b1, b2 to a charging and/or exchange station or alternatively control another mining equipment device 101, 102, 103 within the system 200 to charge the indicated electric battery pack b1, b2 or for exchange of the indicated electrical battery pack b1, b2.

The detection S1 can be done by receiving and processing data from a plurality of sensors provided at the rock drilling rig 101, the electrical battery packs b1, b2 and other mining equipment devices 102, 103 within the system 200. A plurality of sensors is configured to monitor and produce data of at least the energy storage level of the plurality of electrical battery packs. Based on the received and monitored data from the plurality of sensors, the control unit CU is configured to process the data and control rock drilling rig 101.

The control unit CU can be a central control unit or a distributed arrangement of a plurality of control units acting in a cloud network of control units.

The scope of protection of the present invention is only defined in the appended claims.

## Claims

1. Rock drilling rig (101), comprising a carriage (1011), a rock drilling machine (1013), a control unit (CU) and an interface (10) for receiving at least one electrical battery pack (b1, b2), wherein
the control unit (CU) is configured to control the rock drilling rig (101) to perform work tasks according to a work cycle, and the control unit (CU) is configured to control operating power from any electric battery pack (b1, b2) provided in the interface (10), wherein
the interface (10) is configured to receive a plurality of independent electrical battery packs (b1, b2) and the control unit (CU) is configured to selectively control operating power from any electrical battery packs (b1, b2) provided in the interface (10),
wherein the rock drilling rig (101) further comprises an electrical connection for connecting the rock drilling rig to an external electrical source at a work area, wherein
the control unit (CU) is configured to selectively charge any electrical battery pack (b1, b2), from the external electrical source, simultaneously as powering the rock drilling rig (101) or another electrical battery pack (b1, b2) is powering the rock drilling rig(101),
**characterised in that**
the control unit (CU) is configured to continuously monitor and process a plurality of battery parameters indicating any one of: state of charge, state of health, input current and output current and dependent thereon configured to indicate an electric battery pack (b1, b2), having a battery parameter value below a corresponding threshold value for that parameter, for being ready for exchange.

2. Rock drilling rig (101) according to claim 1, wherein the rock drilling rig (101) comprises a plurality of electrical battery packs (b1, b2) arranged in the interface (10).

3. Rock drilling rig (101) according to claim 2, wherein the control unit (CU) is configured to selectively control which, or which combination of electrical battery pack (b1, b2) are powering the rock drilling rig (101).

4. Rock drilling rig (101) according to any of the preceding claims, wherein the control unit (CU) is further configured to, dependent on the continuous monitoring and processing of the plurality of battery parameters, indicate an electric battery pack (b1, b2), having a battery parameter value below a corresponding threshold value for that parameter, for being ready for charge and/or powering of the rock drilling rig (101).

5. Rock drilling rig (101) according to any of the preceding claims, wherein the rock drilling rig (101) further comprises a fuel cell, which is configured to
- power the rock drilling rig (101) alone or in combination with any electrical battery pack (b1, b2) arranged thereon
- charge any electrical battery pack (b1, b2) arranged thereon.

6. System (200) of mining equipment, comprising at least a rock drilling rig (101) according to any one the preceding claims, a plurality of battery packs (b1, b2) and a control unit (CU), wherein
- the electrical battery packs (b1, b2) are physical separate entities and are configured to be controlled independent of each other, and
- the control unit (CU) is configured to
- control the rock drilling rig (101) to perform work tasks according to a work cycle,
- operating power from any electric battery pack (b1, b2) provided in the interface (10) of the at least one rock drilling rig (101).

7. System (100) according to the preceding claim 6, wherein the system additionally comprises a plurality of sensors, and
the plurality of sensors is configured to monitor and produce data of at least one of
- a capacity of the battery packs (b1, b2),
- a position of the mining equipment devices (101),
- a position of the electrical battery packs (b1, b2, b102_1, b102_2, b103_1, b103_2), and/or
- any connection between electrical battery packs (b1, b2) and a specific mining equipment device (101).

8. System (200) according to any of the preceding claims 6 - 7, wherein the system (200) comprises at least one additional mining equipment device (102, 103) and that mining equipment device (102, 103) is provided with a corresponding interface (10), wherein the electrical battery packs (b1, b2, b102_1, b102_2, b103_1, b103_2) are interchangeable in between all battery interfaces (10) between different types of mining equipment devices (101, 102, 103) and the rock drilling rig (101).

9. System (100), according to any of the preceding claim 6 - 8, wherein the electric battery packs (b1, b2, b102_1, b102_2, b103_1, b103_2) comprise electrical battery packs of different maximum charge capacity.

10. Method for controlling a rock drilling rig (101), wherein the rock drilling rig (101) comprises a carriage (1011), a rock drilling machine (1013), a control unit (CU) and an interface (10) for receiving a plurality of independent electrical battery packs (b1, b2), wherein
the control unit (CU) performs the method of:
controlling the rock drilling rig (101) to perform work tasks according to a work cycle,
selectively control operating power from any electrical battery provided (b1, b2) in the interface (10) to the rock drilling rig (101) dependent on battery specific parameters of the individual electrical battery packs (b1, b2) and the work cycle,
and wherein the rock drilling rig (101) further comprises an electrical connection for connecting the rock drilling rig (101) to an external electrical source at a work area, and the control unit (CU) additionally:
- selectively charging any battery pack (b1/b2) in the interface (10), with electrical power from the external electrical source, simultaneously as powering the rock drilling rig or another battery pack (b1/b2) is powering the rock drilling rig (101),
**characterised in** the control unit:
- continuously monitoring and processing a plurality of battery parameters indicating any one of: state of charge, state of health, input current and output current and dependent thereon indicating an electric battery pack (b1, b2), having a battery parameter value below a corresponding threshold value for that parameter, for being ready for exchange.

11. Method for controlling a system (200) of mining equipment, wherein the system comprises at least a rock drilling rig (101), a plurality of battery packs (b1, b2, b102_1, b102_2, b103_1, b103_2) and a control unit (CU), and
- the rock drilling rig (101) comprises a carriage (1011), a rock drilling machine (1013), and an interface (10) for receiving at least one electrical battery (b1, b2, b102_1, b102_2, b103_1, b103_2),
- the electrical battery packs (b1, b2, b102_1, b102_2, b103_1, b103_2) are physical separate entities and independent of each other, and
the control unit (CU) performs the method:
- controlling the rock drilling rig (101) to perform work tasks according to a work cycle,
- controlling operating power to the rock drilling rig (101) from any electric battery pack (b1, b2) provided in the interface of the at least one rock drilling rig (101) dependent on battery specific parameters of the individual electrical battery packs (b1, b2) and the work cycle, and
- continuously monitoring and processing data from a plurality of battery pack parameters indicating any one of: state of charge, state of health, input current and output current of the electrical battery packs (b1, b2), and
- indicating an electric battery pack (b1, b2), having a battery parameter value below a corresponding threshold value for that parameter, for being ready for exchange.

12. Method according to claim 11, wherein the system comprises at least one additional mining equipment device (102, 103) and that mining equipment device (102, 103) is provided with a corresponding interface (10), wherein the electrical battery packs (b1, b2, b102_1, b102_2, b103_1, b103_2) are interchangeable in between all battery interfaces (10) between different types of mining equipment devices (102, 103) and the rock drilling rig (101) and the control unit (CU):
- continuously monitor and processing input data from the rock drilling rig (101) and the at least one additional mining equipment device (102, 103),
- assigning electrical battery packs (b1, b2, b102_1, b102_2, b103_1, b103_2) to the mining equipment devices (101, 102, 103) dependent on the specific mining equipment devices working plan and/or maximum power output.

## Patentansprüche

1. Gesteinsbohranlage (101), umfassend einen Schlitten (1011), eine Gesteinsbohrmaschine (1013), eine Steuereinheit (CU) und eine Schnittstelle (10) zum Aufnehmen mindestens eines elektrischen Batteriepakets (b1, b2), wobei
die Steuereinheit (CU) so konfiguriert ist, dass sie die Gesteinsbohranlage (101) so steuert, dass sie Arbeitsaufgaben nach einem Arbeitszyklus ausführt, und die Steuereinheit (CU) so konfiguriert ist, dass sie eine Betriebsleistung von jedem in der Schnittstelle (10) vorgesehenen elektrischen Batteriepaket (b1, b2) steuert, wobei
die Schnittstelle (10) so konfiguriert ist, dass sie eine Vielzahl unabhängiger elektrischer Batteriepakete (b1, b2) aufnimmt, und die Steuereinheit (CU) so konfiguriert ist, dass sie eine Betriebsleistung von beliebigen elektrischen Batteriepaketen (b1, b2), die in der Schnittstelle (10) vorgesehen sind, selektiv steuert,
wobei die Gesteinsbohranlage (101) weiter eine elektrische Verbindung zum Verbinden der Gesteinsbohranlage mit einer externen Stromquelle an einem Arbeitsbereich umfasst, wobei
die Steuereinheit (CU) so konfiguriert ist, dass sie selektiv ein beliebiges elektrisches Batteriepaket (b1, b2) aus der externen Stromquelle lädt, während gleichzeitig die Gesteinsbohranlage (101) mit Strom versorgt wird oder ein anderes elektrisches Batteriepaket (b1, b2) die Gesteinsbohranlage (101) mit Strom versorgt,
**dadurch gekennzeichnet, dass**
die Steuereinheit (CU) so konfiguriert ist, dass sie kontinuierlich eine Vielzahl von Batterieparametern überwacht und verarbeitet, die einen von Folgenden anzeigen: Ladezustand, Gesundheitszustand, Eingangsstrom und Ausgangsstrom, und davon abhängig konfiguriert ist, um ein elektrisches Batteriepaket (b1, b2) anzuzeigen, das einen Batterieparameterwert unterhalb eines entsprechenden Schwellenwerts für diesen Parameter aufweist, um für einen Austausch bereit zu sein.

2. Gesteinsbohranlage (101) nach Anspruch 1, wobei die Gesteinsbohranlage (101) eine Vielzahl von elektrischen Batteriepaketen (b1, b2) umfasst, die in der Schnittstelle (10) angeordnet sind.

3. Gesteinsbohranlage (101) nach Anspruch 2, wobei die Steuereinheit (CU) so konfiguriert ist, dass sie selektiv steuert, welches oder welche Kombination von elektrischem Batteriepaket (b1, b2) die Gesteinsbohranlage (101) mit Strom versorgt.

4. Gesteinsbohranlage (101) nach einem der vorstehenden Ansprüche, wobei die Steuereinheit (CU) weiter so konfiguriert ist, dass sie in Abhängigkeit von dem kontinuierlichen Überwachen und Verarbeiten der Vielzahl von Batterieparametern ein elektrisches Batteriepaket (b1, b2) mit einem Batterieparameterwert unterhalb eines entsprechenden Schwellenwerts für diesen Parameter als bereit zum Laden und/oder zur Stromversorgung der Gesteinsbohranlage (101) anzeigt.

5. Gesteinsbohranlage (101) nach einem der vorstehenden Ansprüche, wobei die Gesteinsbohranlage (101) weiter eine Brennstoffzelle umfasst, die so konfiguriert ist, dass sie
- die Gesteinsbohranlage (101) allein oder in Kombination mit einem darauf angeordneten elektrischen Batteriepaket (b1, b2) mit Strom versorgt,
- jedes darauf angeordnete elektrische Batteriepaket (b1, b2) lädt.

6. System (200) einer Bergbauausrüstung, umfassend mindestens eine Gesteinsbohranlage (101) nach einem der vorstehenden Ansprüche, eine Vielzahl von Batteriepaketen (b1, b2) und eine Steuereinheit (CU), wobei
- die elektrischen Batteriepakete (b1, b2) physisch getrennte Einheiten sind und so konfiguriert sind, dass sie unabhängig voneinander gesteuert werden, und
- die Steuereinheit (CU) so konfiguriert ist, dass sie
- die Gesteinsbohranlage (101) so steuert, dass es Arbeitsaufgaben nach einem Arbeitszyklus ausführt,
- eine Betriebsleistung aus einem beliebigen elektrischen Batteriepaket (b1, b2), das in der Schnittstelle (10) der mindestens einer Gesteinsbohranlage (101) vorgesehen ist, steuert.

7. System (100) nach dem vorstehenden Anspruch 6, wobei das System zusätzlich eine Vielzahl von Sensoren umfasst, und
die Vielzahl von Sensoren so konfiguriert ist, dass sie Daten von mindestens einer von
- einer Kapazität des Batteriepakets (b1, b2),
- einer Position der Bergbauausrüttungsvorrichtung (101),
- einer Position des elektrischen Batteriepakets (b1, b2, b102_1, b102_2, b103_1, b103_2), und/oder
- jeder Verbindung zwischen elektrischen Batteriepaketen (b1, b2) und einer spezifischen Bergbauausrüstungsvorrichtung (101) überwacht und erzeugt.

8. System (200) nach einem der vorstehenden Ansprüche 6-7, wobei das System (200) mindestens eine zusätzliche Bergbauausrüstungsvorrichtung (102, 103) umfasst und diese Bergbauausrüstungsvorrichtung (102, 103) mit einer entsprechenden Schnittstelle (10) bereitgestellt ist,
wobei die elektrischen Batteriepakete (b1, b2, b102_1, b102_2, b103_1, b103_2) zwischen allen Batterieschnittstellen (10) zwischen verschiedenen Arten von Bergbauausrüstungsvorrichtungen (101, 102, 103) und der Gesteinsbohranlage (101) austauschbar sind.

9. System (100) nach einem der vorstehenden Ansprüche 6-8, wobei die elektrischen Batteriepakete (b1, b2, b102_1, b102_2, b103_1, b103_2) elektrische Batteriepakete mit unterschiedlicher maximaler Ladekapazität umfassen.

10. Verfahren zum Steuern einer Gesteinsbohranlage (101), wobei die Gesteinsbohranlage (101) einen Schlitten (1011), eine Gesteinsbohrmaschine (1013), eine Steuereinheit (CU) und eine Schnittstelle (10) zum Aufnehmen einer Vielzahl unabhängiger elektrischer Batteriepakete (b1, b2) umfasst, wobei die Steuereinheit (CU) das Verfahren ausführt:
Steuern der Gesteinsbohranlage (101) zum Ausführen von Arbeitsaufgaben nach einem Arbeitszyklus, selektives Steuern einer Betriebsleistung von jeder elektrischen Batterie, die in der Schnittstelle (10) vorgesehen ist (b1, b2), an die Gesteinsbohranlage (101) in Abhängigkeit von batteriespezifischen Parametern der einzelnen elektrischen Batteriepakete (b1, b2) und des Arbeitszyklus, und wobei die Gesteinsbohranlage (101) weiter eine elektrische Verbindung zum Verbinden der Gesteinsbohranlage (101) mit einer externen Stromquelle an einem Arbeitsbereich umfasst, und die Steuereinheit (CU) zusätzlich:
- ein beliebiges Batteriepaket (b1/b2) in der Schnittstelle (10) mit elektrischer Energie aus der externen Stromquelle selektiv lädt, während gleichzeitig die Gesteinsbohranlage mit Strom versorgt wird oder ein anderes Batteriepaket (b1/b2) die Gesteinsbohranlage (101) mit Strom versorgt, **dadurch gekennzeichnet, dass** die Steuereinheit:
- eine Vielzahl von Batterieparametern kontinuierlich überwacht und verarbeitet, die einen von Folgenden anzeigen: Ladezustand, Gesundheitszustand, Eingangsstrom und Ausgangsstrom und davon abhängig ein elektrisches Batteriepaket (b1, b2) anzeigt, das einen Batterieparameterwert unterhalb eines entsprechenden Schwellenwerts für diesen Parameter aufweist, um für einen Austausch bereit zu sein.

11. Verfahren zum Steuern eines Systems (200) einer Bergbauausrüstung, wobei das System mindestens eine Gesteinsbohranlage (101), eine Vielzahl von Batteriepaketen (b1, b2, b102_1, b102_2, b103_1, b103_2) und eine Steuereinheit (CU) umfasst, und
- die Gesteinsbohranlage (101) einen Schlitten (1011), eine Gesteinsbohrmaschine (1013) und eine Schnittstelle (10) zum Aufnehmen mindestens einer elektrischen Batterie (b1, b2, b102_1, b102_2, b103_1, b103_2) umfasst,
- die elektrischen Batteriepakete (b1, b2, b102_1, b102_2, b103_1, b103_2) physisch getrennte Einheiten und voneinander unabhängig sind, und die Steuereinheit (CU) das Verfahren ausführt:
- Steuern der Gesteinsbohranlage (101) zum Ausführen von Arbeitsaufgaben nach einem Arbeitszyklus,
- Steuern einer Betriebsleistung der Gesteinsbohranlage (101) von einem beliebigen elektrischen Batteriepaket (b1, b2), das in der Schnittstelle der mindestens einer Gesteinsbohranlage (101) vorgesehen ist, in Abhängigkeit von batteriespezifischen Parametern der einzelnen elektrischen Batteriepakete (b1, b2) und dem Arbeitszyklus, und
- kontinuierliches Überwachen und Verarbeiten von Daten aus einer Vielzahl von Batteriepaketparametern, die einen von Folgenden anzeigen: Ladezustand, Gesundheitszustand, Eingangsstrom und Ausgangsstrom des elektrischen Batteriepakets (b1, b2) und
- Anzeigen eines elektrischen Batteriepakets (b1, b2) mit einem Batteriepaketparameterwert unterhalb eines entsprechenden Schwellenwerts für diesen Parameter, das zum Austausch bereit ist.

12. Verfahren nach Anspruch 11, wobei das System mindestens eine zusätzliche Bergbauausrüstungsvorrichtung (102, 103) umfasst und diese Bergbauausrüstungsvorrichtung (102, 103) mit einer entsprechenden Schnittstelle (10) bereitgestellt ist,
wobei die elektrischen Batteriepakete (b1, b2, b102_1, b102_2, b103_1, b103_2) zwischen allen Batterieschnittstellen (10) zwischen verschiedenen Arten von Bergbauausrüstungsvorrichtungen (102, 103) und der Gesteinsbohranlage (101) sowie der Steuereinheit (CU) austauschbar sind:
- Eingangsdaten von der Gesteinsbohranlage (101) und der mindestens einen zusätzlichen Bergbauausrüstungsvorrichtung (102, 103) kontinuierlich überwacht und verarbeitet,
- elektrische Batteriepakete (b1, b2, b102_1, b102_2, b103_1, b103_2) den Bergbauausrüstungsvorrichtungen (101, 102, 103) in Abhängigkeit vom spezifischen Arbeitsplan der Bergbauausrüstungsvorrichtungen und/oder einer maximalen Leistungsabgabe zuweist.

## Revendications

1. Appareil de forage de roche (101), comprenant un chariot (1011), une machine de forage de roche (1013), une unité de commande (CU) et une interface (10) pour recevoir au moins un bloc-batterie électrique (b1, b2), dans lequel
l'unité de commande (CU) est configurée pour commander l'appareil de forage de roche (101) pour effectuer des tâches de travail selon un cycle de travail, et l'unité de commande (CU) est configurée pour commander la puissance de fonctionnement provenant de n'importe quel bloc-batterie électrique (b1, b2) disposé dans l'interface (10), dans lequel
l'interface (10) est configurée pour recevoir une pluralité de blocs-batteries électriques indépendants (b1, b2) et l'unité de commande (CU) est configurée pour commander sélectivement la puissance de fonctionnement provenant de n'importe quels blocs-batteries électriques (b1, b2) disposés dans l'interface (10),
dans lequel l'appareil de forage de roche (101) comprend en outre une connexion électrique pour connecter l'appareil de forage de roche à une source électrique externe au niveau d'une zone de travail, dans lequel
l'unité de commande (CU) est configurée pour charger sélectivement n'importe quel bloc-batterie électrique (b1, b2), à partir de la source électrique externe, simultanément à l'alimentation de l'appareil de forage de roche (101) ou un autre bloc-batterie électrique (b1, b2) alimente l'appareil de forage de roche (101),
**caractérisé en ce que**
l'unité de commande (CU) est configurée pour surveiller et traiter en continu une pluralité de paramètres de batterie indiquant l'un quelconque parmi : l'état de charge, l'état de santé, le courant d'entrée et le courant de sortie et en fonction de ceux-ci est configurée pour indiquer un bloc-batterie électrique (b1, b2), présentant une valeur de paramètre de batterie inférieure à une valeur seuil correspondante pour ce paramètre, comme étant prêt pour un échange.

2. Appareil de forage de roche (101) selon la revendication 1, dans lequel l'appareil de forage de roche (101) comprend une pluralité de blocs-batteries électriques (b1, b2) agencés dans l'interface (10).

3. Appareil de forage de roche (101) selon la revendication 2, dans lequel l'unité de commande (CU) est configurée pour commander sélectivement quel bloc-batterie électrique ou quelle combinaison de blocs-batteries électriques (b1, b2) alimentent l'appareil de forage de roche (101).

4. Appareil de forage de roche (101) selon l'une quelconque des revendications précédentes, dans lequel l'unité de commande (CU) est en outre configurée pour, en fonction de la surveillance et du traitement continus de la pluralité de paramètres de batterie, indiquer un bloc-batterie électrique (b1, b2), présentant une valeur de paramètre de batterie inférieure à une valeur seuil correspondante pour ce paramètre, comme étant prêt pour une charge et/ou une alimentation de l'appareil de forage de roche (101).

5. Appareil de forage de roche (101) selon l'une quelconque des revendications précédentes, dans lequel l'appareil de forage de roche (101) comprend en outre une pile à combustible, qui est configurée pour
- alimenter l'appareil de forage de roche (101) seul ou en combinaison avec n'importe quel bloc-batterie électrique (b1, b2) disposé sur celui-ci
- charger n'importe quel bloc-batterie électrique (b1, b2) disposé sur celui-ci.

6. Système (200) d'équipement d'exploitation minière, comprenant au moins un appareil de forage de roche (101) selon l'une quelconque des revendications précédentes, une pluralité de blocs-batteries (b1, b2) et une unité de commande (CU), dans lequel
- les blocs-batteries électriques (b1, b2) sont des entités physiques séparées et sont configurés pour être commandés indépendamment les uns des autres, et
- l'unité de commande (CU) est configurée pour
- commander l'appareil de forage de roche (101) pour effectuer des tâches de travail selon un cycle de travail,
- commander la puissance de fonctionnement provenant de n'importe quel bloc-batterie électrique (b1, b2) disposé dans l'interface (10) de l'au moins un appareil de forage de roche (101).

7. Système (100) selon la revendication précédente 6, dans lequel le système comprend en outre une pluralité de capteurs, et
la pluralité de capteurs est configurée pour surveiller et produire des données d'au moins l'une parmi
- une capacité des blocs-batteries (b1, b2),
- une position des dispositifs d'équipement d'exploitation minière (101),
- une position des blocs-batteries électriques (b1, b2, b102_1, b102_2, b103_1, b103_2), et/ou
- n'importe quelle connexion entre des blocs-batteries électriques (b1, b2) et un dispositif d'équipement d'exploitation minière spécifique (101).

8. Système (200) selon l'une quelconque des revendications précédentes 6 à 7, dans lequel le système (200) comprend au moins un dispositif d'équipement d'exploitation minière supplémentaire (102, 103) et ce dispositif d'équipement d'exploitation minière (102, 103) est pourvu d'une interface correspondante (10), dans lequel les blocs-batteries électriques (b1, b2, b102_1, b102_2, b103_1, b103_2) sont interchangeables entre toutes les interfaces de batterie (10) entre différents types de dispositifs d'équipement d'exploitation minière (101, 102, 103) et l'appareil de forage de roche (101).

9. Système (100), selon l'une quelconque des revendications précédentes 6 à 8, dans lequel les blocs-batteries électriques (b1, b2, b102_1, b102_2, b103_1, b103_2) comprennent des blocs-batteries électriques à capacité de charge maximale différente.

10. Procédé de commande d'un appareil de forage de roche (101), dans lequel l'appareil de forage de roche (101) comprend un chariot (1011), une machine de forage de roche (1013), une unité de commande (CU) et une interface (10) pour recevoir une pluralité de blocs-batteries électriques indépendants (b1, b2), dans lequel
l'unité de commande (CU) met en œuvre le procédé consistant à :
commander l'appareil de forage de roche (101) pour effectuer des tâches de travail selon un cycle de travail,
commander sélectivement la puissance de fonctionnement de n'importe quelle batterie électrique (b1, b2) disposée dans l'interface (10) vers l'appareil de forage de roche (101) en fonction de paramètres spécifiques de batterie des blocs-batteries électriques individuels (b1, b2) et du cycle de travail,
et dans lequel l'appareil de forage de roche (101) comprend en outre une connexion électrique pour connecter l'appareil de forage de roche (101) à une source électrique externe au niveau d'une zone de travail, et l'unité de commande (CU) en outre :
- charge sélectivement n'importe quel bloc-batterie (b1/b2) dans l'interface (10), avec de l'énergie électrique provenant de la source électrique externe, simultanément à l'alimentation de l'appareil de forage de roche ou un autre bloc-batterie (b1, b2) alimente l'appareil de forage de roche (101),
**caractérisé en ce que** l'unité de commande :
- surveille et traite en continu une pluralité de paramètres de batterie indiquant l'un quelconque parmi : l'état de charge, l'état de santé, le courant d'entrée et le courant de sortie et en fonction de ceux-ci indique un bloc-batterie électrique (b1, b2), présentant une valeur de paramètre de batterie inférieure à une valeur seuil correspondante pour ce paramètre, comme étant prêt pour un échange.

11. Procédé de commande d'un système (200) d'équipement d'exploitation minière, dans lequel le système comprend au moins un appareil de forage de roche (101), une pluralité de blocs-batteries (b1, b2, b102_1, b102_2, b103_1, b103_2) et une unité de commande (CU), et
- l'appareil de forage de roche (101)comprend un chariot (1011), une machine de forage de roche (1013), et une interface (10) pour recevoir au moins une batterie électrique (b1, b2, b102_1, b102_2, b103_1, b103_2),
- les blocs-batteries électriques (b1, b2, b102_1, b102_2, b103_1, b103_2) sont des entités physiques séparées et indépendantes les unes des autres, et
l'unité de commande (CU) met en œuvre le procédé consistant à :
- commander l'appareil de forage de roche (101) pour effectuer des tâches de travail selon un cycle de travail,
- commander la puissance de fonctionnement vers l'appareil de forage de roche (101) provenant de n'importe quel bloc-batterie électrique (b1, b2) disposé dans l'interface de l'au moins un appareil de forage de roche (101) en fonction de paramètres spécifiques de batterie des blocs-batteries électriques individuels (b1, b2) et du cycle de travail, et
- surveiller et traiter en continu des données provenant d'une pluralité de paramètres de bloc-batterie indiquant l'un quelconque parmi : l'état de charge, l'état de santé, le courant d'entrée et le courant de sortie des blocs-batteries électriques (b1, b2), et
- indiquer un bloc-batterie électrique (b1, b2), présentant une valeur de paramètre de batterie inférieure à une valeur seuil correspondante pour ce paramètre, comme étant prêt pour un échange.

12. Procédé selon la revendication 11, dans lequel le système comprend au moins un dispositif d'équipement d'exploitation minière supplémentaire (102, 103) et ce dispositif d'équipement d'exploitation minière (102, 103) est pourvu d'une interface correspondante (10), dans lequel les blocs-batteries électriques (b1, b2, b102_1, b102_2, b103_1, b103_2) sont interchangeables entre toutes les interfaces de batterie (10) entre différents types de dispositifs d'équipement d'exploitation minière (102, 103) et l'appareil de forage de roche (101) et l'unité de commande (CU) :
- surveille et traite en continu des données d'entrée provenant de l'appareil de forage de roche (101) et de l'au moins un dispositif d'équipement d'exploitation minière supplémentaire (102, 103),
- attribue des blocs-batteries électriques (b1, b2, b102_1, b102_2, b103_1, b103_2) aux dispositifs d'équipement d'exploitation minière (101, 102, 103) en fonction du plan de travail et/ou de la sortie de puissance maximale de dispositifs d'équipement d'exploitation minière spécifiques.
